Europäisches Patentamt

European Patent Office

Office européen des brevets

(19)

(11) Publication number: **0 361 917**
**A2**

(12) # EUROPEAN PATENT APPLICATION

(21) Application number: **89309880.6**

(22) Date of filing: **28.09.89**

(51) Int. Cl.⁵: **G03B 21/62**

(30) Priority: **28.09.88 DK 5414/88**

(43) Date of publication of application:
**04.04.90 Bulletin 90/14**

(84) Designated Contracting States:
**DE FR IT NL**

(71) Applicant: **DAI NIPPON PRINTING CO., LTD.**
**1-1-1, Ichigayakaga-cho Shinjuku-ku**
**Tokyo(JP)**

(72) Inventor: **Clausen, Johannes**
**Skovhegnet 2**
**DK-2920 Charlottenlund(DK)**
Inventor: **Clausen, Erik**
**Ermelundsvej 26**
**DK-2820 Gentofte(DK)**

(74) Representative: **Blake, John Henry Francis et al**
**BROOKES AND MARTIN High Holborn House**
**52/54 High Holborn**
**London WC1V 6SE(GB)**

(54) **Rear-projection screen.**

(57) A transparent rear-projection screen (4b) having a rear side to which red, green and blue pictures are projected from projectors (1, 2, 3). The rear side has parallel convex lenses (31) the focal points (36) of which are located in the front side of the screen. The front side is composed of parallel ridges (32) separated by deep recesses (34) of triangular cross section so that the thickness of each ridge (32) gradually decreases towards its top (33). The flanks of each ridge (32) are covered with a light-impenetrable material (35) while the top (33) of the ridge is not covered to allow light to pass therethrough. The dimensions of the ridges (32), the recesses (34) and so on are determined relative to each other so as to prevent decrease of contrast due to light rays which are transmitted through the front side into the screen and reflected back to the outside after internal reflection.

FIG. I

## REAR-PROJECTION SCREEN

The present invention relates to a rear-projection screen of the kind which on its rear side facing projectors is provided with parallel convex lenses, the focal points of which are located on the front plane of screen, and which on its front side is provided with parallel ridges and recesses between adjoining ridges, the tops of the ridges forming the front plane of the screen, the flank surfaces of the ridges being applied with a light impenetrable material to increase the contrast.

Rear-projection screens of the above kind is known from U.S. Patent No. 4,432,010 issued February 14, 1984, and have been used for video-projection devices, micro film readers, data machines and flight simulators.

In the known rear-projection screens of the above kind, the front side faces the outside or room so that light naturally comes from the room into the screen. In the known screens, light from the room is, after penetrating into the screen, reflected internally in the screen and then emitted back into the room through the front surface of the screen, as will be described in detail hereinafter. This adversely affects the contrast of the picture produced by the screen.

The object of the present invention is to eliminate the problem stated above and to increase the contrast of the picture produced.

According to the present invention, the above object is attained by a rear-projection screen of the kind stated above in which the ridges on the front side of the screen is separated by deep recesses of triangular cross section so that the thickness of each ridge gradually decreases towards its top, in which the flanks of each ridge are covered with a light-impenetrable material with the top of the ridge not covered to allow light to pass therethrough.

Preferably, the depth of the recesses is larger than twice the thickness of the ridges at their tops, and the depth of the recesses is larger than one-fourth of the thickness of the screen.

The present invention will be described in more detail below with reference to the drawings, in which:

Fig. 1 is a schematic plan view showing three projectors and a rear-projection screen to which light is emitted from the projectors;

Fig. 2 is a perspective view of a rear-projection screen according to the present invention;

Fig. 3 is a fragmentary schematic plan view, in section, of the rear-projection screen, showing how light rays pass through the screen;

Fig. 4 is a view similar to Fig. 3, showing how light rays from the front side are absorbed by the black colour layers; ·

Fig. 5 is a view of a screen with preferred dimensions, showing how light rays from the front side are transmitted into the screen and then reflected to be absorbed by the black colour layers;

Figs. 6, 7 and 8 are views used for comparison of effectiveness of three rear-projection screens of different dimensions;

Fig. 9 is a horizontal section of a known rear-projection screen;

Figs. 10 and 11 are views similar to Fig. 9, showing how light passes through the screen in the known screen; and

Fig. 12 is a view similar to Fig. 10, showing how light passes through and is reflected in the known screen.

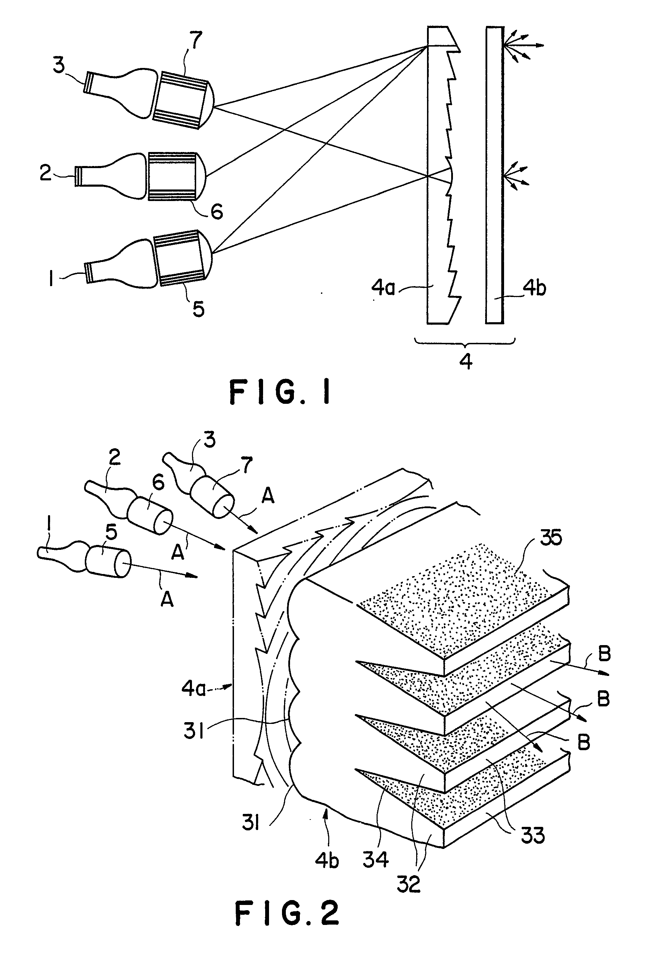

Referring to Fig. 1, there are illustrated three projectors 1, 2 and 3 which project TV-pictures towards the rear side of a rear-projection screen 4. These projectors emit green, red and blue light, respectively. The three projectors are placed next to each other horizontally, so that the middle projector 2, most often the green projector, has its optical axis perpendicular to the screen 4. The screen 4 consists of Fresnel means 4a for paralleling light from the projectors 1, 2 and 3 and lens means 4b for refracting the paralleled light.

The optical axes of the projectors 1 and 3 often form an angle of 6°-10° with the optical axis of the projector 2. By means of the three projectors 1, 2 and 3, as well as projection lenses 5, 6 and 7 mounted in front of them, it is possible to form - proportional to the projectors - an enlarged picture on the screen 4.

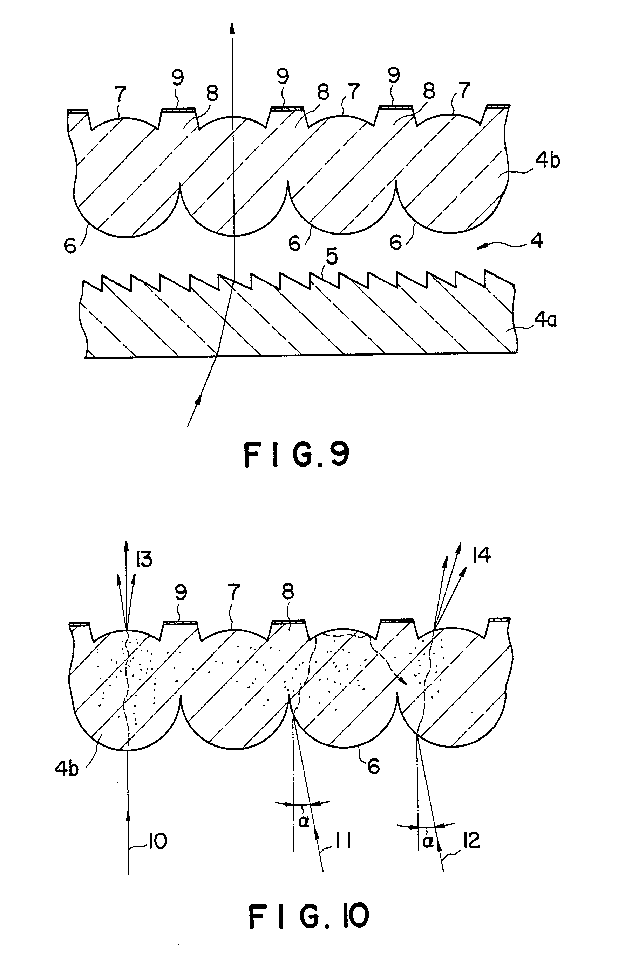

A known rear-projection screen 4 is constructed as shown in Fig. 9 and as disclosed in U.S. Patent No. 4,432,010 issued February 14, 1984. In Fig. 9, the Fresnel means 4a has a Fresnel lens 5, while the lens means 4b, which is a picture forming screen, comprises parallel convex lenses or leticular lenses 6 extending vertically on the rear side of the screen 4b, parallel convex (lenticular) lenses 7 extending vertically on the front side of the screen 4b at horizontally spaced disposition, and parallel ridges 8 disposed between adjoining convex lenses 7, the ridges 8 also extending vertically and having on their tops black stripes 9 for enhancing the picture contrast. The Fresnel lens 5 is provided to convert the light from the projectors into parallel rays of light. The lenses 6 serve the purpose of spreading the light in horizontal directions.

The screen 4b is mixed with refractive powdered particles or $SiO_2$ for spreading the light in vertical directions. The refractive particles may be evenly distributed over the entire thickness of the screen 4b as illustrated in Fig. 10, in which light beams 10, 11 and 12 from behind advance into the screen 4b and then emitted to the outside as bundles of vectors 13 and 14. Fig. 10 shows that the light beam 11 originating from the red or blue light source is lost due to inner reflection.

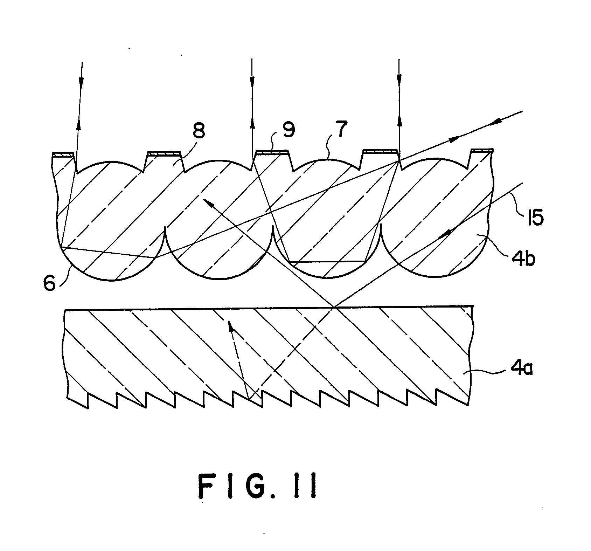

It is known among professionals that the picture forming ability of a rear-projection screen is reduced when it is used in a very illuminated room. This is because light which has entered the screen 4b from the front side undergoes inside reflection and is directed to the outside at different positions as shown in Fig. 11 and because some light from the front side of the screen is lost in the screen.

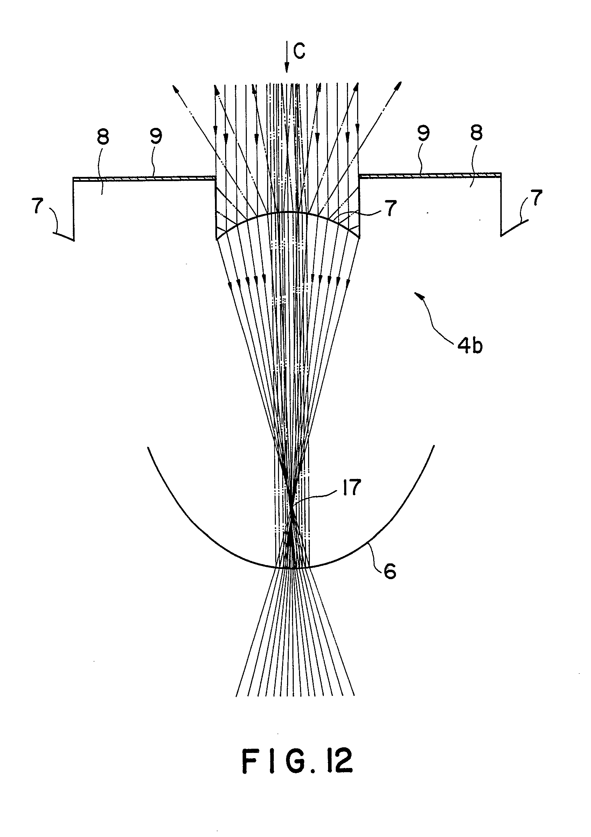

Furthermore, as shown in Fig. 12, room light directed to the front surface of each convex lens 7 perpendicularly to the major plane of the screen 4b as indicated by letter C is condensed at 17 in the screen and then reflected internally by the rear convex lens 6 to be emitted back into the room as indicated by chain lines.

It will be understood from the foregoing that in the known rear-projection screen light coming from the front side of the screen is, after internal reflection in the screen, emitted back to the front side with diffusion, thereby reducing the contrast of the screen. In order to reduce this adverse effect, the width of the front convex lenses 7 might be reduced but this would result in reduction of the overall area through which the picture forming light is emitted to the front side.

These problems are solved by the present invention which will be described below with reference to Figs. 2 through 8.

Fig. 2 shows an embodiment of the rear-projection screen according to the present invention. In Fig. 2, the screen generally indicated by 4b is made of a transparent material, for example, an acrylic resin. The rear side of the screen 4b, that is, the side facing the projectors 1, 2 and 3, is provided with parallel convex lenses 31, the focal point of which is located on the front plane of the screen, consisting of parallel ridges 32 and recesses 34. The tops 33 of the ridges 32 form the front plane of the screen. The convex lenses 31, the ridges 32 and the recesses 34 extend parallel to a line connecting the three projectors 1, 2 and 3 mutually. The ridges 32 are disposed at positions corresponding to the convex lenses 31. The flank surfaces of the ridges 32 are applied with a light-impenetrable material 35, for example of black colour, to increase the contrast. The thickness of the ridges 32 gradually decreases towards the tops 33 so that the recesses 34 are triangular in cross section. The light-impenetrable material 35 may fill the recesses 34 completely.

The light beams A from the projectors 1, 2 and 3 are converted into parallel rays by a Fresnel lens 4a disposed behind the screen 4b and hit the screen 4b normally to its major plane. The beams, passing through the screen 4b, are emitted to the outside as indicated at B through the tops 33 of the ridges 32.

In the case of a rear light projection TV, the three projectors 1, 2 and 3 are normally placed with the centre line connecting these horizontally. If the screen 4b is turned by an angle of 90° so that the lenses 31 and the ridges 32 form an angle of 90° compared to the connecting line of the projectors, the light beams from the projector 1 and 3 will be deflected so that they hit the inner sides of the flanks of the ridges 32 and are adsorbed by the black colour 35.

When the screen 4b is placed with the lenses 31 and the ridges 32 extending parallel with the line connecting the projectors, light beams from the projectors 1 and 3 will also be transmitted through the tops 33, because these have no limitations to diffusion at horizontal level. For diffusion of the light horizontally and vertically, refractive particles may be mixed in the tops 33 of the ridges.

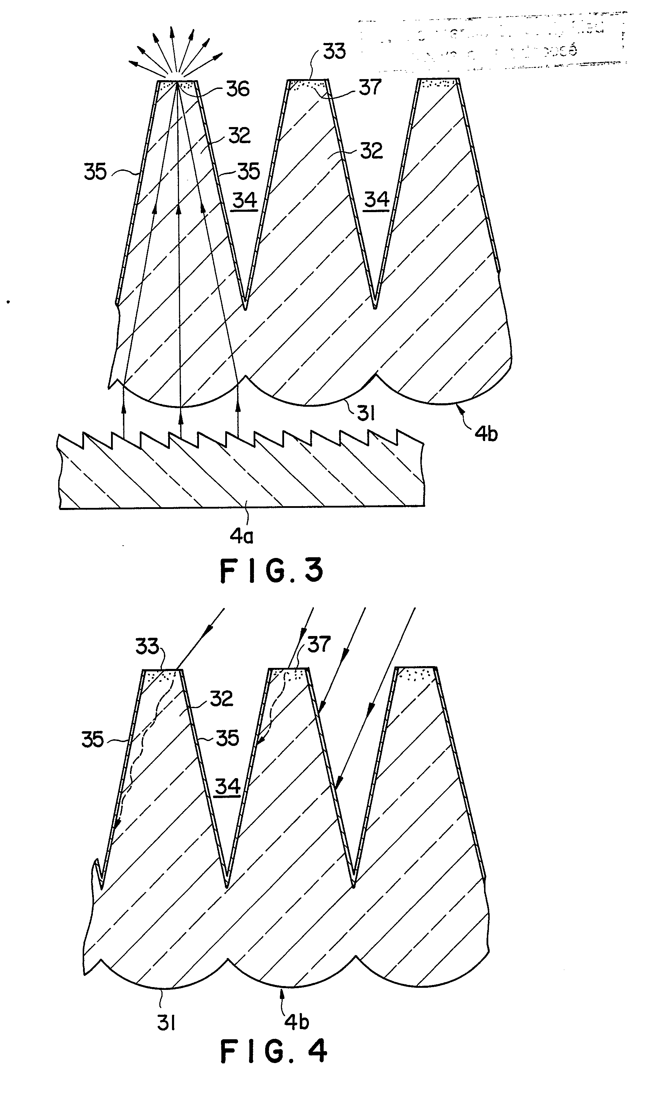

In Fig. 3 are shown paths of rays of light through the screen 4b. It will be seen that the light beams from the projectors are converted into parallel rays by the Fresnel lens 4a and then transmitted into the screen 4b in which the rays are condensed at the focal points 36 each located at the top 33 of each ridge 32. Thereafter, the rays are diffused by means of refractive particles 37 mixed in the region of the top 33 and emitted to the outside as shown.

It is not indispensable for the invention whether the ridge top 33 is plane or has convex or concave form, or whether the refractive particles are placed at or on the top 33.

Fig. 4 shows a view for illustration of how light beams from the room are absorbed by the black colour 35 on the flanks of the ridges 32.

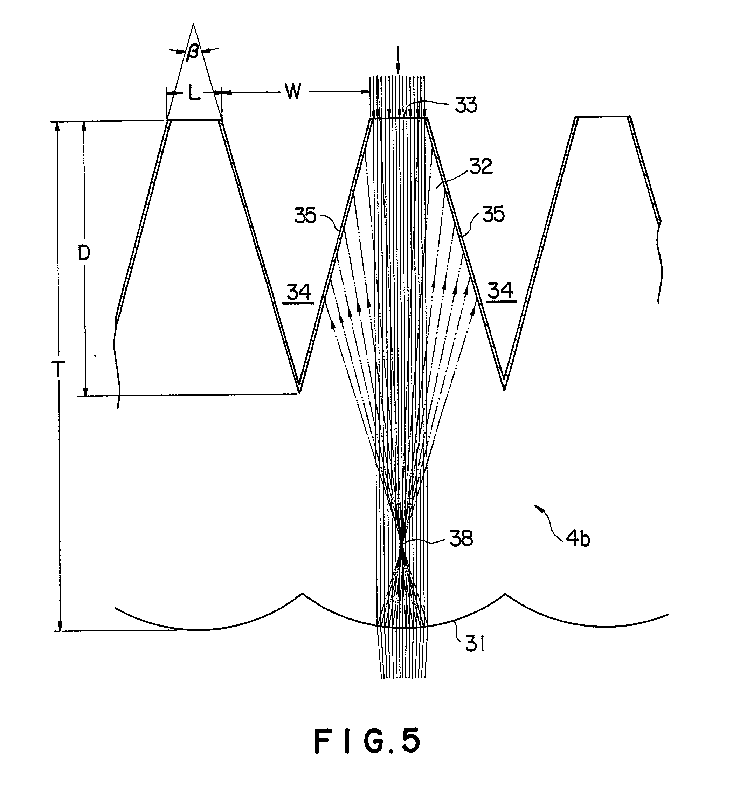

Fig. 5 shows a preferred example of dimensional relations of the rear-projection screen 4b according to the present invention. In Fig. 5, L is the thickness of each ridge 32 at its top 33; W, the width of each recess 34 between adjoining tops 33 of the ridges; D, the depth of the recess 34; and T, the thickness of the screen 4b.

3

It has been found preferable in the present invention that the depth D of the recesses 34 be larger than twice the thickness L of the ridges. That is, D > 2L.

Furthermore, the depth D of the recesses 34 is preferably larger than one-fourth of the thickness T of the screen, that is, D > T/4.

In the specific example shown in Fig. 5, D is approximately five times as much as L (D $\doteq$ 5L). As shown in this figure, parallel rays of light coming from the room through the ridge top 33 advance straight to the inner surface of the rear convex lens 31 and are reflected thereby to be condensed at a point 38 and then diverged towards the flanks of the ridges 32 as shown by the chain lines. It will be seen that the reflected diverging light rays hit the light-impenetrable layers 35 and are absorbed thereby so that the internally reflected rays are not transmitted to the outside whereby there is no adverse effect on the contrast of the picture. In this specific example, the condition D > T/4 is satisfied. It will be understood that the thickness L of the ridges 32 is not unduly reduced whereby ample area for the outgoing picture forming rays is provided.

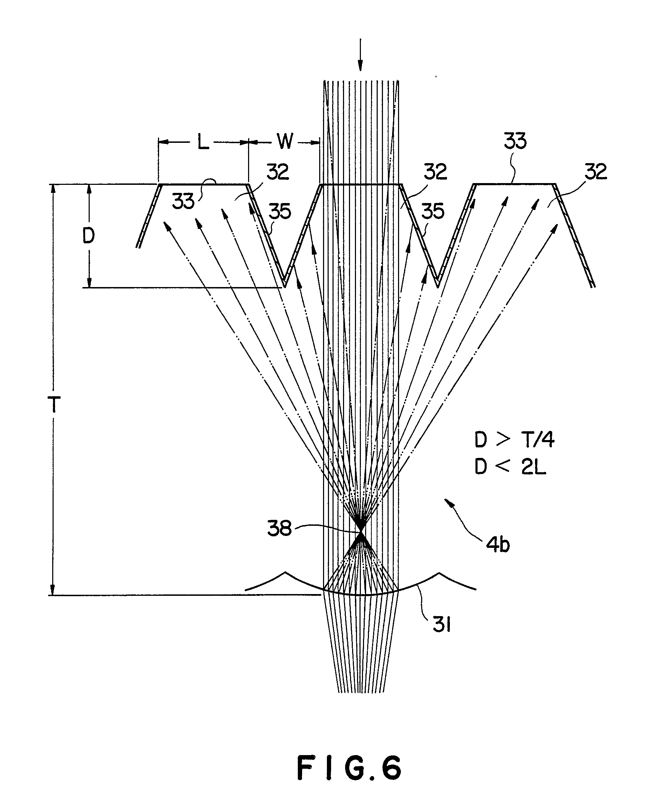

In the example shown in Fig. 6, the condition of D > T/4 is satisfied. However, the condition D > 2L is not met but D < 2L. It will be seen that in this example the reflected rays diverging from the point 38 reach the adjoining ridges 32 and are emitted outwards through the tops 33 of the adjoining ridges. This example of comparison is not desirable from the viewpoint of preventing adverse effect on the contrast.

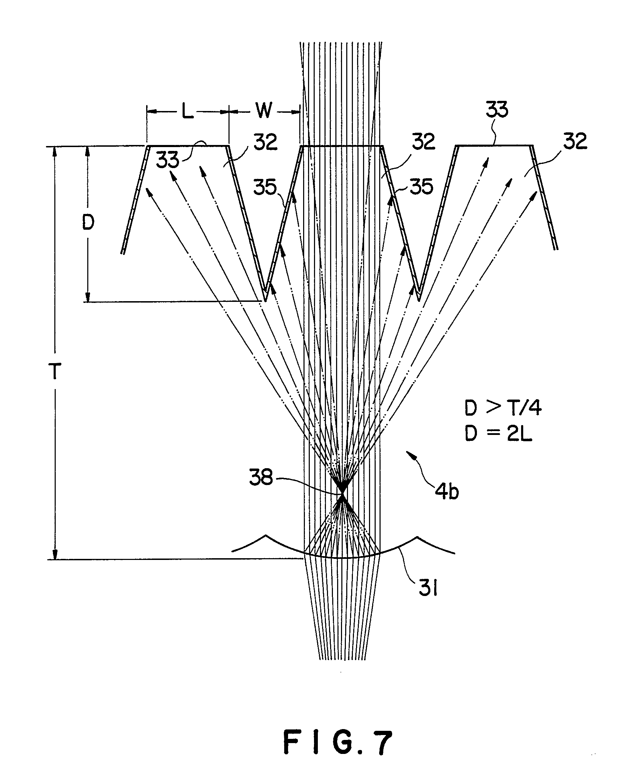

The example of comparison shown in Fig. 7 is also not desirable because D is equal to 2L although the other condition is satisfied. It will be seen that the reflected diverging rays reach the adjoining ridge tops 33 to be emitted outwards therethrough.

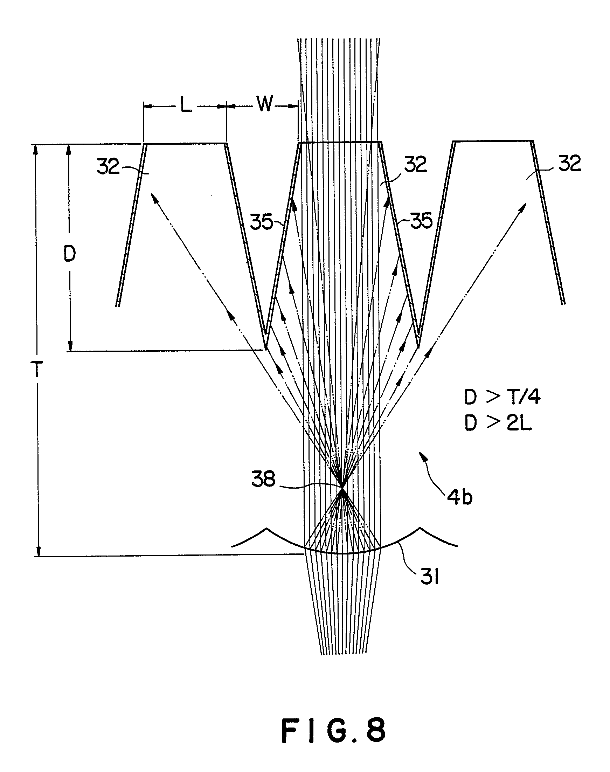

Fig. 8 showed a good example of the present invention wherein all the dimensional conditions are satisfied. It will be seen that only a small portion of the reflected diverging rays is directed to the adjoining ridges 32 and a major portion of the reflected rays impinges upon and is absorbed by the light-impenetrable layers 35.

## Example 1

By means of a tool with a profile as illustrated in Fig. 5 was cast a 3-mm thick plate of PMMA with 120 g $SiO_2$ per m$^2$ having a grain size of 15-40 $\mu$m. The pitch of the lenses 31 was 1.2 mm. Radius of curvature of the lens 31 was 1.0 mm, and the angle $\beta$ was 24$^\circ$. The width W of the recesses 34 was 1.65 mm. The thickness L of the lenses 32 was 0.3 mm. The depth D of the recesses was 1.6 mm and the thickness T of the screen was 3.0 mm. After the casting mould had been filled it was placed horizontally, with the lenses 32 directed downwards, whereby the refractive powder sedimented so that it settled as a well formed layer at the surface 33 of the lens 32, with a thickness less than 100 $\mu$m. When the screen was taken out of the casing mould, the lens tops 33 were applied with PVA (Polyvinyl alcohol). Then black colour was applied on the flanks of the lenses 32.

After an appropriate drying time the PVA film was removed from the tops 13,

The screen then showed the following parameters:

Peak Gain: 3.5

1.2 Horizontal peak gain: 25$^\circ$

1 2 Vertical peak gain: 25$^\circ$

Peak gain means the direct-transparent light measured as normal to the surface in comparison to a known reference ($MgCo_3$).

| Contrast conditions when the TV is switched off: | | | |
|---|---|---|---|
| Screen, as ex. 1 | | Known, black-striped screen, as shown in Fig. 9 | |
| Screen | White reference | Screen | White reference |
| 1.4 | 58 | 9.4 | 60 |

The screen showed extreme high contrast and good efficiency so that the picture was made visible over a big visual angle, horizontally as well as vertically at a visual field + - 90$^\circ$.

4

Example 2

In this example a PMMA plate was cast as described in Example 1. The pitch of the lenses 31 was 1.2 mm. Radius of the lens 31 was 1.0 mm. The depth D was 1.6 mm. The angle $\beta$ was 20°. The thickness L of the lens top 33 was 0.6 mm.

After casting a film of PVA was applied to the lens tops 33. The other conditions were as in Example 1.

The screen showed the following parameters:

Peak Gain: 3.6

1/2 Horizontal peak gain: 24°

1/2 Vertical peak gain: 24°

| Contrast conditions when the TV is switched off: | | | |
|---|---|---|---|
| Screen, as Example 1 | | Known, black-striped screen, as shown in Fig. 9 | |
| Screen | White reference | Screen | White reference |
| 1.6 | 60 | 9.6 | 61 |

The screen showed extreme high contrast and good efficiency, so that the picture was made visible over a big visual angle, horizontally as well as vertically at a visual field + - 90°.

Example 3

In this example the dimensions were as in Example 1. The screen was extruded by clear PMMA without diffusing powder. Then the tops 33 of the ridges were applied with a film of PVA. The flanks of the ridges were sprayed with black colour. Then the PVA film on the tops of the ridges was removed. A mixture of lacquer with a diffusing medium was coated on the entire surface.

The screen showed the same parameters as Example 1.

It will be understood from the foregoing that the present invention provides an excellent rear-projection screen which can prevent decrease of contrast by internally reflected light while providing ample width of the ridge tops to allow the picture forming light from behind to pass to the front side. It will also be understood that the provision of the light-impenetrable layers on only the flanks of the ridges serves to allow the picture forming light from behind to pass to the front side without causing the light to be absorbed by the light-impenetrable layers.

**Claims**

1. A rear-projection screen having on its rear side parallel convex lenses (31), the focal length of which is equal to the thickness of the screen and which transmit light coming from behind to the front side of the screen, the front side having parallel spaced ridges (32) extending parallel to the rear convex lenses (31), characterized in that the ridges (32) are separated by deep recesses (34) of triangular cross section disposed between adjoining ridges so that the thickness of each ridge gradually decreases towards its top (33), that the flanks of each ridge (32) are covered with a light-impenetrable material (35) with the top (33) of the ridge not covered to allow light to pass therethrough.

2. The screen according to claim 1, wherein the depth (D) of the recesses (34) is larger than twice the thickness (L) of the ridges at their tops, and is larger than one-fourth of the thickness (T) of the screen.

3. The screen according to claim 1, wherein refractive powder is placed in the top (33) of each ridge (32).

4. The screen according to claim 1, wherein the recesses (34) are filled with the light-impermeable material (35).

5. The screen according to claim 1, wherein the top (33) of each ridge (32) is plane.

6. The screen according to claim 1, wherein the top (33) of each ridge (32) is convex.

7. The screen according to claim 1, wherein the top (33) of each ridge (32) is concave.

FIG. 1

FIG.2

F I G. 3

F I G. 4

F I G.5

F I G.6

F I G. 7

F I G . 8

FIG.9

FIG.10

F I G. II

F I G. 12